Europäisches Patentamt

European Patent Office

Office européen des brevets

(19)

(11) Numéro de publication: **0 216 405**
**B1**

(12) # FASCICULE DE BREVET EUROPEEN

(45) Date de publication du fascicule du brevet:
08.11.89

(51) Int. Cl.⁴: **F16B 19/06, F16B 19/08**

(21) Numéro de dépôt: 86201399.2

(22) Date de dépôt: 08.08.86

(54) **Rivet notamment pour matériaux composites.**

(30) Priorité: **18.09.85 FR 8513932**

(43) Date de publication de la demande:
**01.04.87 Bulletin 87/14**

(45) Mention de la délivrance du brevet:
**08.11.89 Bulletin 89/45**

(84) Etats contractants désignés:
**AT BE CH DE FR GB IT LI LU NL SE**

(56) Documents cités:
**BE-A- 565 704**
**BE-A- 758 751**
**DE-A- 2 707 291**
**GB-A- 687 574**
**GB-A- 1 448 977**
**US-A- 3 837 208**
**US-A- 4 202 243**
**US-A- 4 221 041**

(73) Titulaire: **ATELIERS DE LA HAUTE-GARONNE -**
**ETABLISSEMENTS AURIOL & Cie S.a.R.L., Flourens,**
**F-31130 Balma(FR)**
Titulaire: **Auriol, Jean-Marc, Les Blanches Flourens,**
**F-31130 Balma(FR)**
Titulaire: **Bornes, Philippe, La Madeleine Flourens,**
**F-31130 Balma(FR)**

(72) Inventeur: **Auriol, Jean-Marc, Les Blanches Flourens,**
**F-31130 Balma(FR)**
Inventeur: **Bornes, Philippe, La Madeleine Flourens,**
**F-31130 Balma(FR)**

(74) Mandataire: **Barre, Philippe, Cabinet**
**Barre-Gatti-Laforgue 95 rue des Amidonniers,**
**F-31069 Toulouse Cédex(FR)**

ACTORUM AG

## Description

L'invention concerne un rivet comprenant une tête préformée et une tige dotée d'un perçage axial pour former une partie tubulaire ; ce rivet peut être semi-tubulaire, le perçage axial étant borgne et s'étendant uniquement du côté opposé à la tête préformée ; il peut également être entièrement tubulaire, le perçage axial débouchant des deux côtés du rivet de façon à permettre de réaliser un rivetage aveugle. L'invention s'applique plus particulièrement pour réaliser l'assemblage de pièces en matériaux tendres ou fragiles, notamment matériaux synthétiques laminés renforcés par des fibres (souvent désignés par "matériaux composites").

Les rivets traditionnels sont inaptes à assurer un assemblage satisfaisant des matériaux composites ; en effet le gonflement radial de la tige de rivet et les forces de pression qui s'exercent sous la tête postformée, engendrent un délaminage du matériau et un décollement des fibres et du liant : l'assemblage présente alors une très mauvaise tenue en fatigue, avec des risques d'échappement du rivet à brève échéance.

Le brevet US-A 4.221.041 décrit un rivet semi-tubulaire qui vise à remédier à ces défauts. Toutefois, des tests ont permis de constater qu'un tel rivet était encore le siège d'une expansion importante sous la tête post-formée et d'un gonflement d'ensemble relativement important au niveau des autres parties de la tige, ne sorte que la tenue en fatigue des assemblages réalisés n'est généralement pas satisfaisante, en particulier dans le secteur aéronautique.

De plus, les conditions de pose (pression mise en oeuvre) influent considérablement sur la qualité de l'assemblage obtenu et la pose de ces rivets doit être effectuée avec des pressions de bouterollage très précises ce qui, en pratique, rend cette opération délicate. Enfin, un rivet ayant des paramètres dimensionnels donnés est adapté à l'assemblage de pièces d'épaisseurs précises avec de faibles tolérances admissibles et, dans ces conditions, la mise en oeuvre industrielle de ces rivets soulève de graves difficultés pratiques.

Ainsi le problème du rivetage des matériaux fragiles ou tendres se trouve mal résolu à l'heure actuelle.

La présente invention se propose de fournir un rivet perfectionné, permettant de réaliser des assemblages de pièces en matériaux tendres ou fragiles, en particulier matériaux composites, sans détérioration sensible du matériau au voisinage du rivet en vue de conserver au matériau ses qualités de résistance.

A cet effet l'objet essentiel de l'invention est de fournir un rivet susceptible d'être posé sans être soumis à des phénomènes sensibles d'expansion ou de gonflement, aussi bien sous la tête post-formée que dans les autres parties de la tige.

Un autre objectif de l'invention est de faciliter les conditions de mise en place du rivet, en autorisant une large plage de pression de pose.

Un autre objectif est d'accroître notablement la plage des épaisseurs susceptibles d'être assemblées par un même type de rivets, en vue de faciliter la mise en oeuvre industrielle de ceux-ci.

A cet effet, le rivet visé par l'invention comprend une tête préformée et une tige dotée d'un trou axial débouchant au moins du côté opposé à la tête préformée pour former une partie tubulaire s'étendant au moins à l'opposé de ladite tête ; selon la présente invention, une gorge périphérique est ménagée sur la surface externe de la tige au niveau de la partie tubulaire de celle-ci du côté opposé à la tête préformée, une surface d'accostage étant préservée sur ladite surface externe au voisinage de l'extrémité de la tige.

Ainsi, comme on le comprendra mieux plus loin, la gorge périphérique forme sur la partie tubulaire du rivet une zone de pliage qui, sous l'effet de la pression de pose, permet à la surface d'accostage de venir s'appliquer contre le matériau à assembler, sans modification dimensionnelle sensible des parties de la tige situées entre ladite gorge et la tête préformée ; de plus, au niveau de la gorge, la tige de rivet demeure sans contact avec le matériau à assembler (tout au moins sur une partie de la longueur de la gorge) : ainsi la zone où prend naissance la seconde tête (zone qui sollicite considérablement le matériau à assembler dans les rivets antérieurs précités) ne développe aucun effort de pression sur le matériau et n'engendre donc aucun risque de détérioration de celui-ci à ce niveau.

De préférence la gorge périphérique est ménagée à distance de l'extrémité libre de la tige de rivet de façon que la surface d'accostage soit préservée à l'extérieur de ladite gorge, entre celle-ci et l'extrémité libre de ladite tige. Toutefois dans une variante, il est possible de prévoir une gorge s'étendant jusqu'à l'extrémité libre de la tige (avec une profondeur décroissante vers cette extrémité), la surface d'accostage se trouvant alors située dans la gorge elle-même.

Le rivet conforme à l'invention peut être de type semi-tubulaire, le trou axial de sa tige étant borgne et débouchant uniquement du côté opposé à la tête préformée. La pose d'un tel rivet nécessite la présence d'une bouterolle de contre-appui du côté de la tête préformée et d'une bouterolle de rivetage de l'autre côté.

Le rivet peut aussi être du type rivet aveugle, avec un trou axial traversant sa tige de part en part : la pose d'un tel rivet requiert uniquement un accès du côté de la tête préformée et s'effectue au moyen d'un mandrin inséré dans le trou axial et pourvu d'une tête de rivetage.

Le rivet conforme à l'invention peut être réalisé en tout matériau approprié ; il est de préférence réalisé en titane ou en alliage de titane afin d'en accroître la résistance à la corrosion (titane T40, alliage de titane au niobium).

D'autres caractéristiques, buts et avantages de l'invention se dégageront de la description qui suit en référence aux dessins annexés, lesquels en présentent à titre d'exemples non limitatifs deux modes de réalisation préférentiel ; sur ces dessins qui font partie intergrante de la présente description :

- la figure 1 est une coupe axiale, à échelle dilatée, d'un rivet semi-tubulaire conforme à l'invention,

- les figures 2, 3, 4 et 5 sont des vues schématiques en coupe, illustrant la pose de ce rivet,
- la figure 6 est une coupe axiale de l'assemblage réalisé au moyen de celui-ci,
- la figure 7 est une coupe axiale, à échelle dilatée, d'un rivet aveugle conforme à l'invention, muni de son mandrin de rivetage,
- les figures 8, 9 et 10 sont des vues schématiques en coupe, illustrant la pose de ce rivet et l'assemblage réalisé.

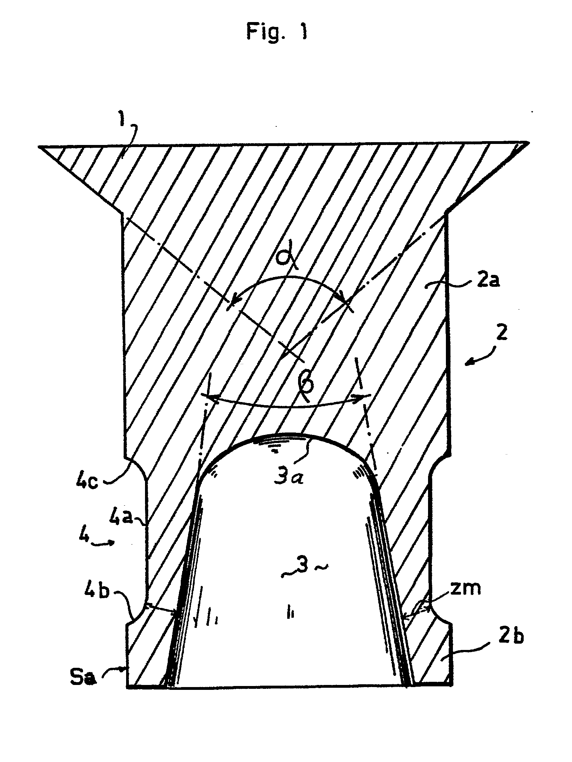

Le rivet semi-tubulaire représenté à titre d'exemple à la figure 1 peut en particulier être réalisé en titane commercialement pur T40. Il comprend, d'une part, une tête fraisée préformée 1 ayant une forme tronconique d'angle α égal à 100°, d'autre part, une tige cylindrique 2 composée d'une partie pleine 2a sous la tête préformée et d'une partie semi-tubulaire 2b à l'opposé de la tête préformée.

La partie semi-tubulaire 2b est dotée d'un trou axial 3 de forme tronconique, s'évasant vers l'extrémité opposée à la tête préformée et débouchant à cette extrémité. L'angle de conicité β du trou peut être ajusté dans une large plage s'étendant approximativement entre 10° et 30° ; un angle de l'ordre de 20° donne d'excellents résultats.

En l'exemple, le fond 3a du trou présente approximativement la forme d'une calotte sphérique et le trou 3 s'étend sur un peu moins de la moitié de la longueur de la tige 2.

En outre, au niveau de la partie tubulaire 2b, la surface externe de la tige est dotée d'une gorge périphérique 4 dont le fond 4a est en l'exemple cylindrique, d'axe confondu avec l'axe de la tige. Cette gorge prend naissance à une distance déterminée de l'extrémité libre de la tige de façon à préserver, entre elle-même et cette extrémité, une surface d'accostage Sa sur la surface externe de la tige.

Du côté opposé à la surface d'accostage Sa, la gorge 4 s'étend approximativement jusqu'au voisinage du fond 3a du perçage axial comme le montre la figure 1. Par exemple pour un rivet de 6,5 mm de longueur totale, le trou 3 peut avoir une profondeur de l'ordre de 3 mm, la surface d'accostage Sa a une longueur de l'ordre de 0,75 mm et la gorge une longueur de l'ordre de 2 mm et une profondeur de l'ordre de 0,2 mm. Une telle gorge permet d'assembler des épaisseurs de matériau variable qui, en l'exemple, peuvent varier sur une plage largement supérieure à 1 millimètre.

La gorge périphérique 4 se raccorde à la surface externe de la tige par des parties à section circulaire (raccordement 4b du côté de la surface d'accostage et raccordement 4c du côté opposé).

La gorge 4 ci-dessus décrite définit, sur la partie tubulaire de la tige, une zone de moindre épaisseur Zm située à proximité immédiate de la naissance de ladite gorge du côté de la surface d'accostage Sa (près du raccordement 4b) ; en raison de la conicité du trou 3, l'épaisseur de la partie tubulaire décroit progressivement depuis l'extrémité 4c de la gorge jusqu'à la zone de moindre épaisseur Zm : ainsi, lors de la pose, l'épanouissement de la partie tubulaire 2b s'amorce au niveau de cette zone Zm pour s'étendre progressivement vers le coeur de la gorge.

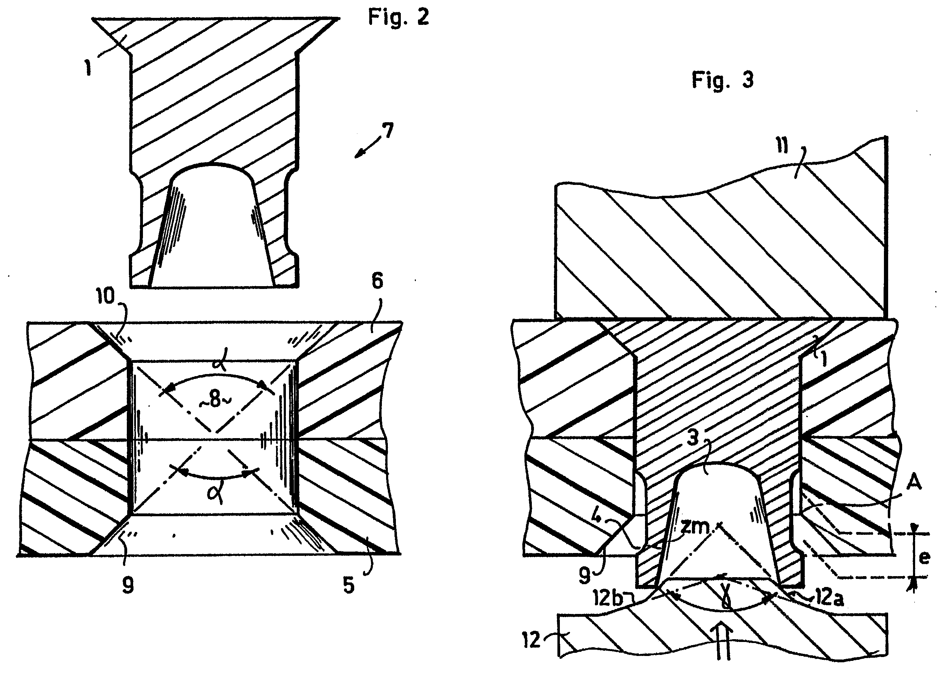

La figure 2 présente deux feuilles 5 et 6 de matériaux synthétiques laminés renforcés par des fibres, qui sont à assembler au moyen de rivets 7 du type décrit ci-dessus. Les feuilles sont percées d'un trou 8 dont l'alésage correspond au diamètre externe de la tige de rivet avec un faible jeu (qui peut être de l'ordre de 1/10 à 2/10 mm) ; des fraisures coniques identiques 9 et 10 sont ménagées des deux côtés des feuilles, avec un angle de conicité α identique à celui de la tête fraisée 1 du rivet (100°). Il est à noter que les deux fraisures identiques 9 et 10 peuvent être réalisées avec le même outil ce qui simplifie le travail de préparation.

Le rivetage s'effectue au moyen de deux bouterolles 11 et 12 telles que représentées à la figure 3, l'une (11) jouant le rôle de contre-appui du côté de la tête préformée 1, l'autre (12) étant soumise en l'exemple à une pression comprise entre 700 et 1 200 décaNewtons pour former la seconde tête et réaliser le rivetage.

La bouterolle 12 comporte, d'une part, une paroi d'amorce du bouterollage 12a dont l'angle de conicité peu critique peut être de l'ordre de 90°, d'autre part, une paroi de bouterollage 12b de forme tronconique dont l'angle au sommet γ est adapté pour assurer le repliage centrifuge de l'extrémité tubulaire du rivet. Pour un angle de conicité de 20° pour le perçage 3 et de 100° pour la fraisure 9, l'angle γ optimum est de 135°.

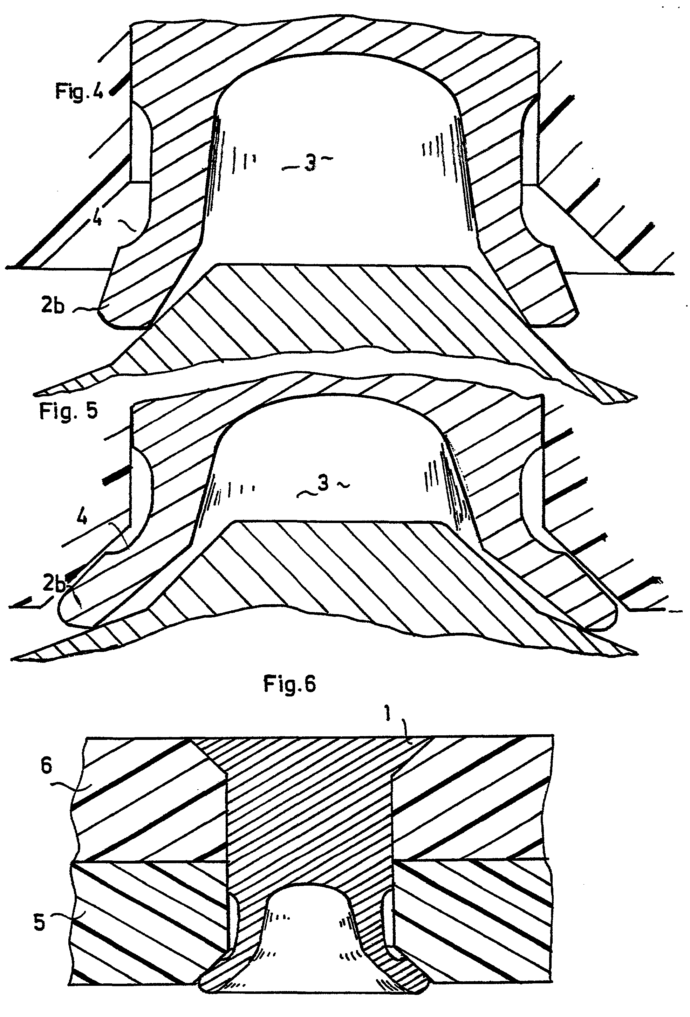

Comme l'illustrent les figures 4 et 5, le rivet se déforme d'abord sans accostage de la surface Sa (la pression minimum exigée à cette étape étant de l'ordre de 450 décaNewtons), puis la surface Sa vient s'appliquer contre la fraisure 9 ; la pression à cette dernière étape doit être au moins égale à environ 700 décaNewtons pour obtenir des qualités de résistance satisfaisantes, mais n'est pas critique au-dessus de ce seuil en raison de la présence de la gorge 4 : en effet, celle-ci autorise un pliage sans gonflement de la tige jusqu'à des pressions nettement plus élevées (1.200 décaNewtons) et protège l'angle de raccordement A des feuilles, qui n'est soumis à aucune compression dans cette large plage de pression.

La tolérance -e- sur l'épaisseur des feuilles à assembler a été symbolisée à la figure 3 : compte tenu du mode de pliage du rivet (qui s'amorce toujours dans la zone Zm pour s'étendre progressivement le long de la gorge), il suffit que l'angle de raccordement A vienne en correspondance avec la gorge, avec un léger décalage vers le coeur de celle-ci aussi bien du côté de la zone Zm que du côté opposé. Pour une gorge de 2 mm de longueur, la tolérance admissible est largement supérieure à 1 mm.

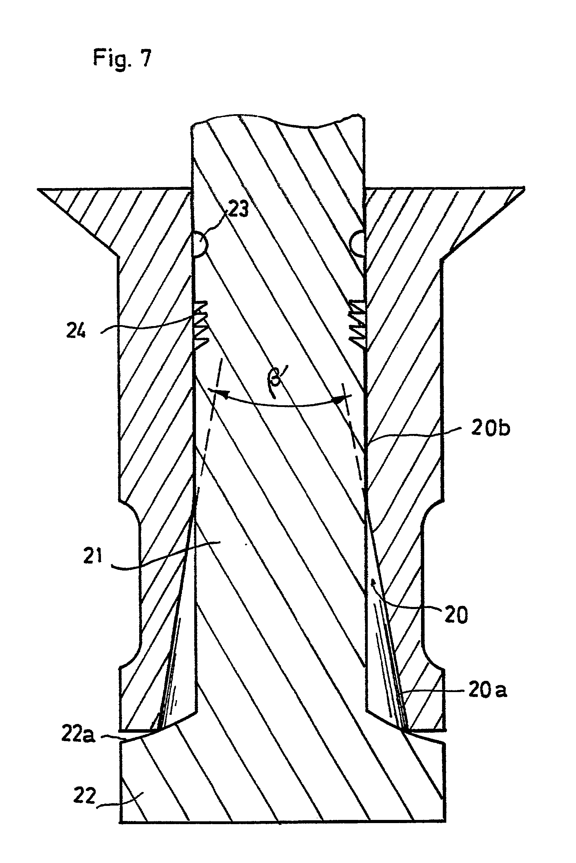

La figure 6 représente l'assemblage terminé.

Des examens micrographiques de coupes de l'assemblage ont confirmé que les feuilles de matériaux composites ne sont pas blessées par le rivetage. De plus des essais de résistance ont montré que la résistance au déboutonnage est très satisfaisante et se trouve souvent dimensionnée par la résistance du composite.

Par ailleurs, la figure 7 représente une variante du rivet ci-dessus décrit, permettant un rivetage aveugle à partir d'un seul côté de l'assemblage.

Ce rivet présente des caractéristiques analogues au précédent et seules les différences avec ce dernier sont décrites ci-après. En premier lieu, ledit rivet est doté d'un trou axial 20 qui traverse sa tige de part en part. Ce trou possède, du côté opposé à la tête préformée, un tronçon de forme tronconique 20a et, sur son autre portion, un tronçon de forme cylindrique 20b. Le tronçon 20a qui débouche à l'opposé de la tête préformée possède un angle au sommet β' approximativement compris entre 10° et 30° et de préférence de l'ordre de 20°.

Le rivet est équipé d'un mandrin de rivetage 21. En l'exemple, ce mandrin possède une tête de rivetage 22 de diamètre accru, qui fait saillie du tronçon tronconique 20a du trou axial de rivet. Cette tête 22 est pourvue d'une paroi de rivetage 22a venant en appui contre l'extrémité tubulaire du rivet. Cette paroi présente en l'exemple une forme générale tronconique d'angle au sommet adapté pour assurer le repliage centrifuge de l'extrémité tubulaire du rivet. Cet angle peut être de l'ordre de 135°. Il est à noter qu'une faible concavité de la paroi 22a paraît améliorer le rivetage.

L'autre partie du mandrin 21 est de forme cylindrique et dépasse du côté de la tête préformée du rivet pour permettre d'exercer une traction sur ledit mandrin. Cette partie cylindrique possède, de façon connue en soi, une gorge de rupture 23 au niveau de laquelle la tige du mandrin est appelée à se rompre à partir d'un seuil de traction prédéterminé.

En outre, en l'exemple, le mandrin 21 est doté d'une denture annulaire 24, connue en soi, qui évite lors de la pose, après rupture du mandrin, que ce dernier s'échappe et tombe du côté de l'assemblge opposé à la tête préformée.

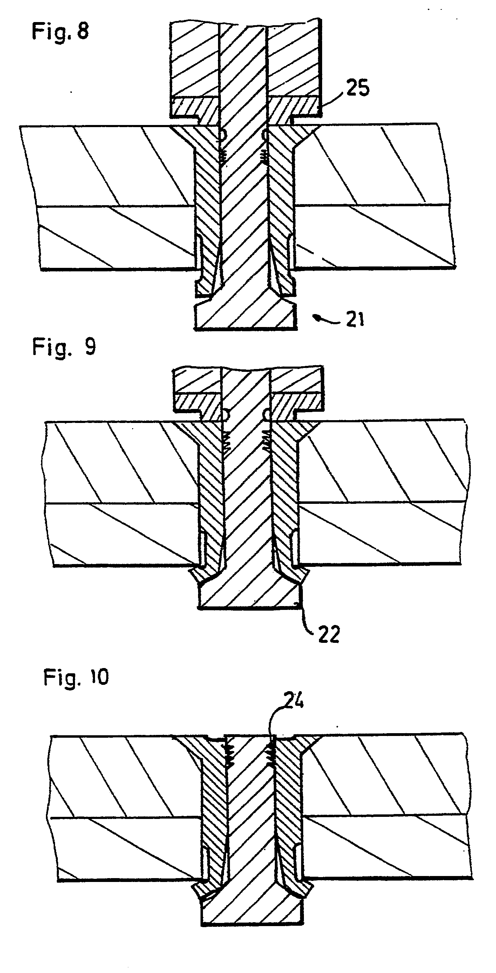

La pose d'un tel rivet aveugle s'effectue par un processus classique illustré aux figures 8, 9 et 10, au moyen d'une bouterolle de contre-appui 25 associée à un organe de traction. Après rupture du mandrin, celui-ci demeure emprisonné dans le rivet en raison de la déformation de la tige de rivet au niveau de la denture 24.

Il est à noter que l'invention s'applique à tout autre type de rivet aveugle et en particulier aux rivets pourvus d'un mandrin de poussée, que forme la seconde tête de rivet par une pression sur une collerette interne prévue à l'intérieur du trou axial du rivet.

Bien entendu, l'invention n'est pas limitée aux termes de la description qui précède, mais en comprend toutes les variantes. Par exemple, il peut être avantageux d'assurer une lubrification du rivet lors de la pose afin de réduire encore, dans certains cas, les risques d'apparition de criques dans le matériau à assembler. De même des rondelles fraisées peuvent le cas échéant être interposées sur une ou les faces des feuilles de matériaux pour accroître l'assise du rivet.

**Revendications**

1. Rivet comprenant une tête préformée (1) et une tige (2) sensiblement cylindrique de diamètre correspondant à l'alésage des matériaux à assembler, ladite tige étant dotée d'un trou axial (3, 20) débouchant au moins à son extrémité libre pour former une partie tubulaire (2b, 20a), ledit rivet étant caractérisé en ce qu'une gorge périphérique locale (4) est ménagée sur la surface externe de la tige (2) au voisinage de son extrémité libre au niveau de la partie tubulaire (2b, 20a) de celle-ci, ladite gorge ayant un diamètre de fond (4a) inférieur à celui de la tige cylindrique de façon à réduire localement le diamètre externe de la partie tubulaire (2b, 20a) par rapport à celui de la partie cylindrique de la tige en vue de former une zone de pliage sur ladite partie tubulaire, une surface d'accostage (Sa) étant préservée sur la surface externe de ladite tige au voisinage de l'extrémité libre de la tige.

2. Rivet selon la revendication 1, caractérisé en ce que la gorge périphérique (4) est ménagée à distance de l'extrémité de la tige (2) de façon que la surface d'accostage (Sa) soit préservée à l'extérieur de ladite gorge, entre celle-ci et l'extrémité de ladite tige.

3. Rivet selon l'une des revendications 1 ou 2, caractérisé en ce que la gorge périphérique (4) présente une section adaptée pour définir une zone de moindre épaisseur (Zm) sur la partie tubulaire (2b) de la tige.

4. Rivet selon les revendications 2 et 3 prises ensemble, caractérisé en ce que la zone de moindre épaisseur (Zm) est située à proximité immédiate de la naissance de la gorge périphérique (4) du côté de la surface d'accostage (Sa).

5. Rivet selon l'une des revendications 1, 2, 3 ou 4, du type semi-tubulaire présentant un trou axial borgne (3) s'étendant du côté opposé à la tête préformée, caractérisé en ce que la gorge périphérique (4) s'étend approximativement jusqu'au voisinage du fond (3a) du trou axial (3), du côté opposé à la surface d'accostage (Sa).

6. Rivet semi-tubulaire selon la revendication 5, dans lequel le trou axial (3) est de forme tronconique d'angle au sommet (β) approximativement compris entre 10° et 30°.

7. Rivet selon l'une des revendications 1, 2, 3 ou 4, de type aveugle présentant un trou axial (20) traversant de part en part sa tige, caractérisé en ce que ledit trou axial possède un tronçon de forme tronconique (20a) s'ouvrant du côté opposé à la tête préformée.

8. Rivet aveugle selon la revendication 7, caractérisé en ce que le tronçon tronconique (20a) du trou axial possède un angle au sommet (β') approximativement compris entre 10° et 30°.

9. Rivet aveugle selon l'une des revendications 7 ou 8, caractérisé en ce qu'il est pourvu d'un mandrin (21) introduit dans le trou axial (20) de sa tige et possédant une tête de rivetage (22a) à son extrémité opposé à la tête préformée.

10. Rivet selon la revendication 4 et l'une des revendications 6 ou 7, caractérisé en ce que la gorge périphérique (4) possède un fond cylindrique (4a) d'axe confondu avec l'axe de la tige (2), de sorte que l'épaisseur de la partie tubulaire (2b) au niveau de la gorge (4) décroît progressivement jusqu'à la zone de moindre épaisseur (Zm).

11. Rivet selon l'une des revendications 1, 2, 3, 4, 5, 6, 7, 8, 9 ou 10, réalisé en titane ou alliage de titane.

## Claims

1. Rivet comprising a preformed head (1) and a shank (2) of substantially cylindrical diameter, corresponding to the borehole of the materials to be assembled, said shank being endowed with an axial hole (3, 20) opening out at least at its free end so as to form a tubular part (2b, 20a), said rivet being characterised in that a local peripheral groove (4) is provided at the outer surface of shank (2), in the vicinity of its free end and in the region of the tubular part (2b, 20a) of said shank, said groove having a base diameter (4a) smaller than that of the cylindrical shank so as to reduce locally the outer diameter of the tubular part (2b, 20a) by comparison with that of the cylindrical part of the shank with a view to forming a bending zone at said tubular part, an abutting surface (Sa) being retained at the outer surface of said shank in the vicinity of the free end of the shank.

2. Rivet according to claim 1, characterised in that the peripheral groove (4) is provided at a distance from the end of shank (2) so that abutment surface (Sa) is retained at the outside of said groove, between the latter and the end of said shank.

3. Rivet according ton one of claims 1 or 2, characterised in that the peripheral groove (4) has a section capable of defining a zone of reduced thickness (Zm) at tubular part (2b) of the shank.

4. Rivet according to claims 2 and 3 jointly, characterised in that the zone of reduced thickness (Zm) is situated in immediate proximity to the origin of peripheral groove (4) on the side of abutment surface (Sa).

5. Rivet according to one of claims 1, 2, 3, or 4 of semi-tubular type having a blind axial hole (3) which extends from the side opposite to the preformed head, characterised in that peripheral groove (4) extends approximately to the vicinity of bottom (3a) of axial hole (3), on the side opposite to abutment surface (Sa).

6. Semi-tubular rivet according to claim 5, in which the axial hole (3) is of truncated-cone shape with an apex angle (β) comprised approximately between 10° and 30°.

7. Rivet according to one of claims 1, 2, 3 or 4, of blind type, with an axial hole (20) extending right through its shank, characterised in that said axial hole has a section of truncated-cone shape (20a) opening out at the side opposite to the preformed head.

8. Blind rivet according to claim 7, characterised in that the truncated-cone section (20a) of the axial hole has a summit angle (β') comprised approximately between 10° and 30°.

9. Blind rivet according to one of claims 7 or 8, characterised in that it is provided with a pin (21) introduced into axial hole (20) of its shank and provided with a riveting head (22a) at its end opposite to the preformed head.

10. Rivet according to claim 4 and one of claims 6 or 7, characterised in that the peripheral groove (4) has a cylindrical base (4a) the axis of which coincides with the axis of shank (2), so that the thickness of the tubular part (2b) in the region of groove (4) decreases progressively as far as the zone of reduced thickness (Zm).

11. Rivet according to one of claims 1, 2, 3, 4, 5, 6, 7, 8, 9 or 10, made of titanium or titanium alloy.

## Patentansprüche

1. Niet mit einem vorgeformten Kopf (1) und einem Schaft (2) von im wesentlichen zylindrischem Durchmesser im Einklang mit dem Bohrloch der zu verbindenden Materialien, wobei der besagte Schaft ein Axialloch (3, 20) besitzt, das mindestens an seinem freien Ende erweitert ist, so daß ein rohrförmiger Teil (2b, 20a) entsteht, und zwar ist der besagte Niet dadurch gekennzeichnet, daß eine örtliche periphere Nut (4) an der äußeren Oberfläche des Schaftes (2) nahe dem freien Ende des Nietes und im Bereiche von dessen rohrförmigem Teil (2b, 20a) vorgesehen ist, wobei die besagte Nut einen Grunddurchmesser (4a) aufweist, der geringer ist als der Durchmesser des zylindrischen Schaftteiles örtlich verringert ist, um eine Biegezone an dem besagten rohrförmigen Teil zu bilden, wobei an der Außenfläche des besagten Schaftes nahe dem freien Schaftende eine Anlegefläche (Sa) gewahrt bleibt.

2. Niet nach Anspruch 1, dadurch gekennzeichnet, daß die periphere Nut (4) in einem Abstand vom Ende des Schaftes (2) vorgesehen wird, so daß die Anlegefläche (Sa) außerhalb der besagten Nut gewahrt bleibt, und zwar zwischen der besagten Nut und dem Ende des besagten Schaftes.

3. Niet nach einem der Ansprüche 1 oder 2, dadurch gekennzeichnet, daß die periphere Nut (4) einen Abschnitt aufweist, der so beschaffen ist, daß er eine Zone verringerter Dicke (Zm) an dem rohrförmigen Teil (2b) des Schaftes bedingt.

4. Niet nach einem der Ansprüche 2 und 3 gemeinsam, dadurch gekennzeichnet, daß sich die Zone verringerter Dicke (Zm) in unmittelbarer Nähe des Ursprungs der peripheren Nut (4) an der Seite der Anlegefläche (Sa) befindet.

5. Niet nach einem der Ansprüche 1, 2, 3 oder 4, von halbrohrförmigem Typ mit einem blinden axialen Loch (3), das sich von der dem vorgeformten Kopf entgegengesetzten Seite erstreckt, dadurch gekennzeichnet, daß sich die periphere Nut (4) ungefähr bis nahe dem Boden (3a) des Axialloches (3), an der der Anlegefläche (Sa) gegenüberliegenden Seite, erstreckt.

6. Halb-rohrförmiger Niet nach Anspruch 5, bei dem das Axialloch (3) kegelstumpfförmig ist, mit einem Scheitelwinkel (β) ungefähr zwischen 10° und 30°.

7. Niet nach einem der Ansprüche 1, 2, 3 oder 4, von blindem Typ, mit einem Axialloch (20), das ganz durch den Schaft durchgeht, dadurch gekennzeichnet, daß das besagte Axialloch einen kegelstumpfförmigen Abschnitt (20a) umfaßt, der an der dem vorgeformten Kopf gegenüberliegenden Seite mündet.

8. Blindniet nach Anspruch 7, dadurch gekennzeichnet, daß der kegelstumpfförmige Abschnitt (20a) des Axialloches einen Scheitelwinkel (β') aufweist, der annähernd zwischen 10° und 30° beträgt.

9. Blindniet nach einem der Ansprüche 7 oder 8, dadurch gekennzeichnet, daß er mit einem Dorn (21) versehen ist, der in das Axialloch (20) seines Schaftes eingeführt wird und an seinem dem vorgeformten Kopf gegenüberliegenden Ende einen Stauchkopf (22a) besitzt.

10. Niet nach Anspruch 4 und einem der Ansprüche 6 oder 7, dadurch gekennzeichnet, daß die periphere Nut (4) einen Zylinderboden (4a) besitzt, dessen Achse mit der Achse des Schaftes (2) übereinstimmt, wobei die Dicke des rohrförmigen Teils (2b) im Bereiche der Nut (4) allmählich bis zu der Zone verringerter Dicke (Zm) abnimmt.

11. Niet nach einem der Ansprüche 1, 2, 3, 4, 5, 6, 7, 8, 9 oder 10, aus Titan oder Titanlegierung gefertigt.

Fig. 1

Fig. 2

Fig. 3

1

7

10

6

α

~8~

α

9

5

11

1

3

A

4

zm

e

9

12b

γ

12a

12

EP 0 216 405 B1

Fig. 4

—3~

4

2b

Fig. 5

~3~

4

2b

Fig.6

1

6

5

Fig. 7

Fig. 8

25

21

Fig. 9

22

Fig. 10

24